# EUROPEAN PATENT APPLICATION

(11) **EP 1 868 352 A1**
(43) Date of publication of application: **19.12.2007**
(21) Application number: 07011778.3
(22) Date of filing: 15.06.2007
(51) Int. Cl.: H04L 29/08

(54) **Methods, devices and computer program products for providing device status information**

(30) Priority: 16.06.2006 US 814198 P
(71) Applicant: Eaton Power Quality Corporation, Cleveland, OH 44114-2584 (US)
(72) Inventor: Thompson, James Gordon, Raleigh North Carolina 27614 (US)
(74) Representative: Wagner, Karl H.

(57) **Abstract**

Methods, devices and computer program products are provided for providing status information. Status information associated with a network-enabled device (340,341,342) is obtained (315). An animated status report is generated for the network-enabled device based on the obtained status information.

## Description

### CLAIM OF PRIORITY

The present application claims priority from U.S. Provisional Application No. 60/814,198 (Attorney Docket No. 9060-255PR), filed June 16, 2006, the disclosure of which is hereby incorporated herein by reference as if set forth in its entirety.

### BACKGROUND OF THE INVENTION

The present invention relates generally to network-enabled devices, and more particularly, to status information associated with network-enabled devices.

With an increased reliance on electronic devices and electronic methods of communication, more and more devices are being configured to connect to communications networks, i.e. many devices are network-enabled. For example, many power distribution devices, such as, uninterruptible power supplies (UPSs), are configured to connect to a communications network. Network-enabling a UPS may allow the UPS to be remotely monitored to determine the state of the UPS.

In particular, network-enabled devices are typically configured to log status information associated with the device in a file associated with the device. The status information may include temperature, throughput, status of power, voltage, current and the like. A user may obtain the logged status information by, for example, browsing the device using an appropriate web browser. Some devices may even be configured to email the logged status information to the user. However, that status information may be presented in tables of numerical information and/or by graphical indicators, which may be difficult to understand. Historically, such information was designed for printed media (a page either web or paper) and was not animated in nature.

### SUMMARY OF THE INVENTION

Some embodiments of the present invention provide methods, devices and computer program products for providing status information. Status information associated with a network-enabled device is obtained. An animated (visual) status report is generated for the network-enabled device based on the obtained status information.

In further embodiments of the present invention, an audio file corresponding to the animated status report may be generated. The audio file may be generated using text to voice software.

In still further embodiments of the present invention, a change in status of the network-enabled device may be detected and the animated status report may be automatically generated responsive to the detected change in status.

In some embodiments of the present invention, requests for subscriptions to the generated animated status report may be received. The animated status report may be forwarded to subscribers. In certain embodiments of the present invention, the animated status report may be emailed to subscribers as an attachment (MPEG) or a link to a uniform resource locator (URL) for the animated status report may be included in an email to the subscribers.

In further embodiments of the present invention, the device may be an uninterruptible power supply (UPS), electricity meter, feeder protector, network attached storage or any network-enabled device.

### BRIEF DESCRIPTION OF THE DRAWINGS

Figure 1 is a block diagram of a data processing system suitable for use in some embodiments of the present invention.

Figure 2 is a block diagram of a system including a network-enabled device according to further embodiments of the present invention.

Figure 3 is a block diagram illustrating still further embodiments of the present invention in an exemplary network environment.

Figures 4 and 5 are flowcharts illustrating exemplary operations of devices according to various embodiments of the present invention.

### DETAILED DESCRIPTION OF EMBODIMENTS OF THE INVENTION

The invention now will be described more fully hereinafter with reference to the accompanying drawings, in which illustrative embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout. As used herein, the term "and/or" includes any and all combinations of one or more of the associated listed items.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As will be appreciated by one of skill in the art, the invention may be embodied as a method, device, or computer program product. Accordingly, the present invention may take the form of an entirely hardware embodiment or an embodiment combining software and hardware aspects all generally referred to herein as a "circuit" or "module." Furthermore, the present invention may take the form of a computer program product on a computer-usable storage medium having computer-usable program code embodied in the medium. Any suitable computer readable medium may be utilized including hard disks, CD-ROMs, optical storage devices, a transmission media such as those supporting the Internet or an intranet, or magnetic storage devices.

Computer program code for carrying out operations of the present invention may be written in an object oriented programming language such as Java®, Smalltalk or C++. However, the computer program code for carrying out operations of the present invention may also be written in conventional procedural programming languages, such as the "C" programming language or in a visually oriented programming environment, such as VisualBasic.

The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

The invention is described in part below with reference to a flowchart illustration and/or block diagrams of methods, devices and computer program products according to embodiments of the invention. It will be understood that each block of the illustrations, and combinations of blocks, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the block or blocks.

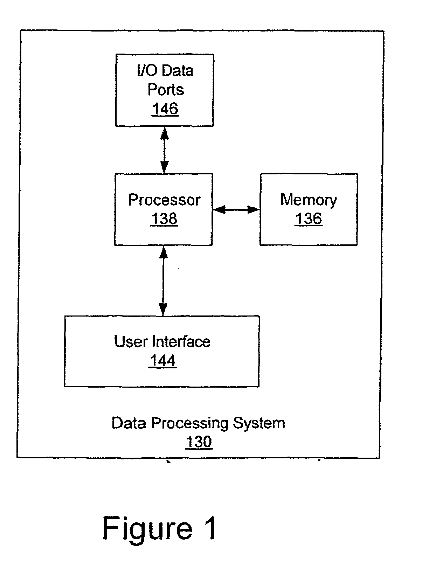

Embodiments of the present invention will now be described with respect to Figures 1 through 5. As discussed herein, embodiments of the present invention provide methods, devices and computer program products for providing status information associated with a network-enabled device. Network-enabled devices, such as uninterruptible power supplies (UPSs), switches, electrical power quality meters, and the like, are configured to log status information associated therewith. As used herein, "status information" refers to any recordable condition of the network-enabled device, for example, voltage, current, temperature, throughput and the like as well as state-of-health information regarding the device itself such as free memory and logfiles. Obtaining access to and interpreting this status information may be difficult and cumbersome. Accordingly, some embodiments of the present invention provide an animated status report generation module associated with a network-enabled device that is configured to generate an animated status report based on the status information obtained and logged by the network-enabled device. It will be understood that as used herein "animated" includes a visual status report.

In some embodiments of the present invention, an audio file may be generated corresponding to the generated animated file using, for example, text to voice software. Thus, according to some embodiments of the present invention, a system administrator may log onto a web page associated with the network-enabled device and view an animated status report associated with the status of the device instead of trying to determine the status from tables and graphs. The animated status report generation module may be configured to generate an animated status report quarterly or at any frequency period of time set by the user. The animated status report generation module may also be configured to generate a report responsive to a detected change in status of the network-enabled device. In some embodiments of the present invention, a user may subscribe to the animated status report and the animated status report generation module may be configured to forward the generated report, for example, by email to the subscribers. Thus, according to some embodiments of the present invention network-enabled device status information may be provided in a user friendly format that is relatively easy to understand as discussed further herein with respect to Figures 1 through 5.

Referring first to Figure 1, an exemplary embodiment of a data processing system 130 configured in accordance with embodiments of the present invention will be discussed. The data processing system 130, which may be incorporated in a network-enabled device, such as a personal computer, server, power supply, a UPS or the like, may include a user interface 144, for example, input or output device(s), such as a keyboard or keypad, a display, a speaker and/or microphone, and a memory 136 that communicate with a processor 138. The data processing system 130 may further include an I/O data port(s) 146 that also communicates with the processor 138. The I/O data ports 146 can be used to transfer information between the data processing system 130 and another computer system or a network using an Internet protocol (IP) connection. These components may be conventional components such as those used in many conventional data processing systems, which may be configured to operate as described herein.

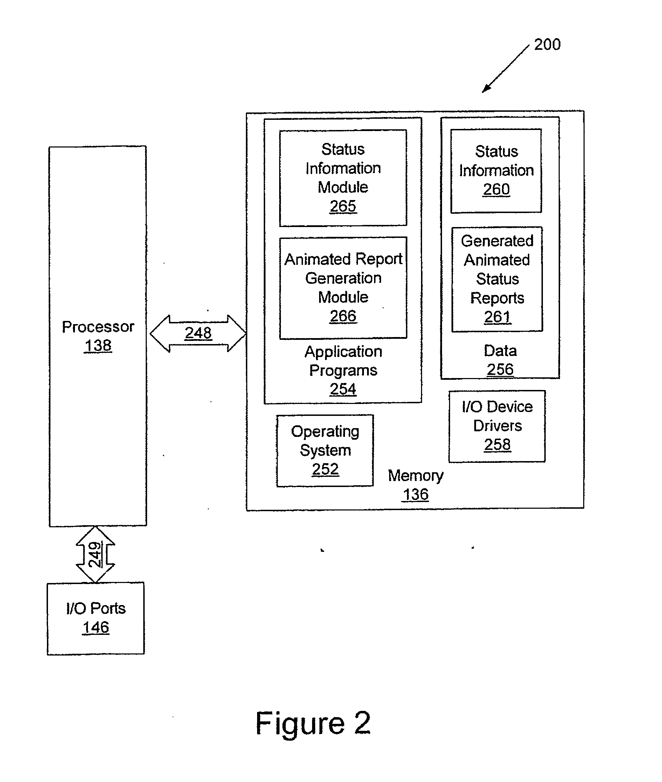

Referring now to Figure 2, a more detailed block diagram of data processing system of Figure 1 according to some embodiments of the present invention will be discussed. The processor 138 communicates with the memory 136 via an address/data bus 248. The processor 138 can be any commercially available or custom microprocessor, microcontroller, digital signal processor or the like. The memory 136 may include any memory devices containing the software and data used to implement the functionality of the data processing system 130. The memory 136 can include, but is not limited to, the following types of devices: cache, ROM, PROM, EPROM, EEPROM, flash memory, SRAM, and DRAM.

As shown in Figure 2, the memory 136 may include several categories of software and data used in the status information module 268: an operating system or kernel 252; application programs 254; input/output (I/O) device drivers 258; and data 256. As will be appreciated by those of skill in the art, the operating system 252 may be any operating system suitable for use with a data processing system or embedded device, such as OS/2, AIX or zOS from International Business Machines Corporation, Armonk, NY, Windows95, Windows98, Windows2000 or WindowsXP from Microsoft Corporation, Redmond, WA, Unix , Linux, embedded Linux, embedded XP, QNX or VxWorks. The I/O device drivers 258 typically include software routines accessed through the operating system 252 by the application programs 254 to communicate with devices such as the I/O data port(s) 146 and certain memory 136 components. The application programs 254 are illustrative of the programs that implement the various features of the data processing system 200 and preferably include at least one application that supports operations according to some embodiments of the present invention. Finally, the data 256 represents the static and dynamic data used by the application programs 254, the operating system 252, the I/O device drivers 258, and other software programs that may reside in the memory 136.

As illustrated in Figure 2, the data 256 includes status information 260 and generated animated status reports 261 according to some embodiments of the present invention. It will be understood that although a single status information 260 file and a single generated animated status reports 261 file are illustrated in Figure 2, embodiments of the present invention are not limited to this configuration. For example, multiple status information files and/or generated animated status reports files may present without departing from the scope of the present invention.

As further illustrated in Figure 2, according to some embodiments of the present invention the application programs 254 include a status information module 265 and an animated status report generation module 266. While the present invention is illustrated with reference to the status information module 265 and the animated status report generation module 266 being application programs in Figure 2, as will be appreciated by those of skill in the art, other configurations fall within the scope of the present invention. For example, rather than being application programs, the status information module 265 and/or the animated status report generation module 266 may also be incorporated into the operating system 252 or other such logical division of the data processing system 130. Furthermore, while the status information module 265 and the animated status report generation module 266 are illustrated in a single data processing system, as will be appreciated by those of skill in the art, such functionality may be distributed across one or more data processing systems. Thus, the present invention should not be construed as limited to the configuration illustrated in Figures 1 through 2, but may be provided by other arrangements and/or divisions of function between data processing systems.

Referring again to Figure 2, the status information module 268 may be configured to obtain status information, for example, voltage, current, temperature, throughput and the like, associated with the network-enabled device and store the obtained status information 260. The status information 260 may be stored on the network-enabled device or external thereto in a memory associated with the network-enabled device. The animated report generation module 265 may be configured to generate an animated status report based on the obtained status information. In some embodiments of the present invention, the animated status report may be similar to, for example, an animated Microsoft PowerPoint^{™} presentation, a slide show , a macromedia Flash^{™} or full motion video on the status of the network-enabled device. For example, the animated status report may include a first portion that is dedicated to the performance history of the device including statistics of past performance, graphs and the like. A second portion of the animated status report may be dedicated to current status information of the network-enabled device, such as current, voltage, temperature and/or throughput data. This data may also be provided in graphs or charts. Finally, a third portion of the animated status report may include forecasts about the future performance of the network-enabled device.

In some embodiments of the present invention, the animated report generation module 266 may be configured to generate an audio file corresponding to the generated animated status report. The audio file may be generated using, for example, text to voice software, such as Microsoft Reader provided by Microsoft or Natural Reader provided by AT&T. The animated or animated/audio report may be generated periodically, such as quarterly, or may be generated when a change in status of the device is detected. For example, if the temperature of the device suddenly increases, an animated (and audio) report may be generated according to some embodiments of the present invention. Once the report is generated, a user may access the report by logging onto a web page associated with the network-enabled device and selecting a link associated with the animated status report.

In some embodiments of the present invention, a user/administrator may subscribe to the animated status report. In these embodiments of the present invention, the animated report generation module may be configured to forward the generated report to the subscribers. For example, the animated status report may be forwarded to the subscribers by email, which may include an animated status report attachment, such as an MPEG file, or a link to a Uniform Resource Locator (URL) for the animated status report.

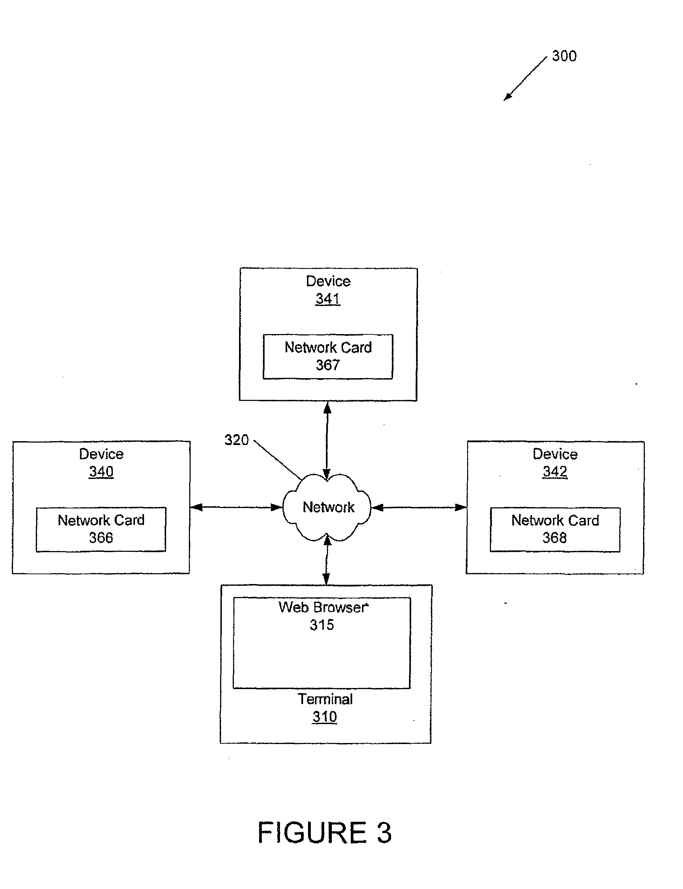

Figure 3 illustrates a network environment 300 according to some embodiments of the present invention. As illustrated in Figure 3, the network environment 300 may include a terminal 310, a network 320 and one or more network-enabled devices 340, 341 and 342, for example, uninterruptible power supplies (UPSs), switches, routers, meters and the like. The terminal 310 may be, for example, a laptop computer, a desktop computer, a personal data assistant (PDA), a web capable mobile terminal or any device capable of communicating with the network 320. As illustrated, the terminal 310 may be configured to run a web browser 315, which may be used by, for example, a system administrator to monitor remote devices 340, 341 and 342. The terminal 310 may communicate over the network 320, for example, the internet, through a telephone line, a digital subscriber link (DSL), a broadband cable link, a wireless link or the like, with the one or more network-enabled devices 340, 341 and 342.

As further illustrated, the network-enabled devices 340, 341 and 342 may include network cards 366, 367 and 368 that communicate with the network 320. In some embodiments of the present invention, the network cards 366, 367 and 368 may be ConnectUPS Web/SNMP Card offered by Eaton Power Quality Corporation, the assignee of the present application. The ConnectUPS Web/SNMP Card is configured to install in a device to provide simple network management protocol (SNMP), hypertext transfer protocol (HTTP), simple mail transfer protocol (SMTP), wireless application protocol (WAP) and Telnet compatibility and advanced RS-232 communications. The network card may allow monitoring and management of devices, for example, servers, routers, hubs, UPSs and other key inter-networking devices. ConnectUPS Web/SNMP cards provide a link between the device and, for example, the Ethernet local area/wide area network (LAN/WAN), allowing the device to be remotely monitored and controlled.

Exemplary operations according to some embodiments of the present invention will now be discussed.with respect to Figures 2 and 3. As discussed above, a system administrator may user a web browser 315 on the terminal 310 to monitor the status of network-enabled devices 340, 341 and 342. As discussed above, the network-enabled devices 340, 341 and 342 may include a data processing system 200 discussed above with respect to Figure 2. Thus, the network-enabled devices 340, 341 and 342 may include status information modules 265 configured to obtain status information associated with the network-enabled devices 340, 341 and 342 and store the status information 260. The status information may include, for example, voltage, current, temperature throughput and the like.

Once the data is obtained, the animated report generation module 266 of the network-enabled devices 340, 341 and 342 may be configured to generate an animated status report 261 based on the obtained and stored status information. The animated status report may be similar to, for example, an animated power point presentation, a slide show or a Macromedia Flash^{™} of the status of the device. As discussed above, the animated status report may include historical status data, current status data and/or forecast status data associated with the network-enabled device. In some embodiments of the present invention, an audio file corresponding to the generated animated status report may be generated using, for example, text to voice software. The animated status report may be generated periodically, for example, quarterly or any time frame chosen by the user. In some embodiments of the present invention, a report may be automatically generated if a change in status of the network-enabled device 340, 341 and 342 is detected. A user, for example, a system administrator, may obtain access to the animated status report by, for example, logging on to a web page associated with the network-enabled device 340, 341 and 342 and selecting a link to the animated status report. The web-page may also contain an archive of old animated status reports.

Furthermore, in some embodiments of the present invention, a system administrator may subscribe to the animated status report. In these embodiments of the present invention, the animated report generation module 266 may be configured to forward the generated report to the subscribers. The animated status report may be forwarded, by for example, email. The email could include the animated status report as an attachment thereto or a link to the animated status report may be included in the email.

It will be understood that although the animated report generation module 266 is illustrated in Figure 2 as being part of the network-enabled device, embodiments of the present invention are not limited to this configuration. For example, the animated report generation module may be provided by a centralized software application in an external device coupled to the network-enabled devices 340, 341 and/or 342. Such a centralized application may be, for example, ForeSeer provided by Eaton Power Quality. Furthermore, in some embodiments of the present invention, the animated report generation module may be included in ELMER monitoring software.

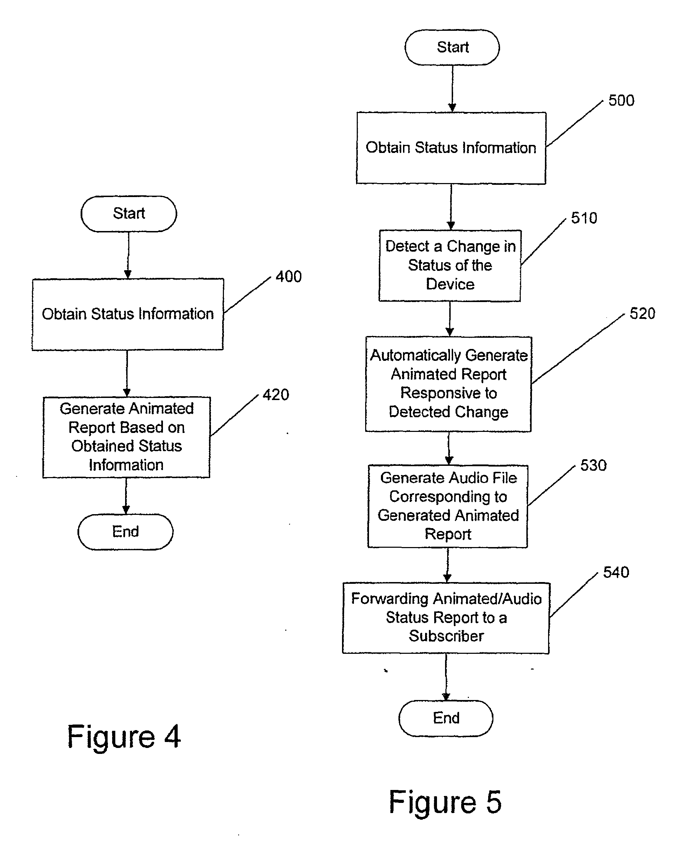

Operations for remotely obtaining status information associated with a network-enabled device will now be discussed further with respect to the flowcharts of Figures 4 and 5. Referring now to Figure 4, operations for providing status information begin at block 400 by obtaining status information associated with a network-enabled device. For example, voltage, current, temperature and throughput data may be obtained and stored by the network-enabled device. The network-enabled device may be, for example, a photocopier, a UPS, a water meter or any device capable of communicating over a network. An animated status report may be generated for the network-enabled device based on the obtained status information (block 420). The animated status report may include, for example, a status history portion, a current status portion and/or a forecast status portion. A user may access the animated status report by, for example, logging onto a web page associated with the network-enabled device and selecting a link on the web page for the animated status report.

Referring now to the flowchart of Figure 5, operations according to further embodiments of the present invention will be discussed. Operations begin at block 500 by obtaining status information associated with a network-enabled device. A change in status of the device may be detected (block 510). For example, the temperature of the network-enabled device may significantly increase. Thus, an animated status report may be automatically generated responsive to the detected change in status (block 520).

In some embodiments of the present invention, an audio file corresponding to the animated status report may be generated (block 530). For example, the audio file may be generated using text to voice software, such as Microsoft Reader or Natural Reader. The animated status report may be forwarded to one or more users who have subscribed to the report (block 540). For example, a user may receive an email including the animated status report as an attachment, such as an MPEG file. Furthermore, the user may alternatively receive an email including a link to a URL for the animated status report.

In the drawings and specification, there have been disclosed exemplary embodiments of the invention. Although specific terms are employed, they are used in a generic and descriptive sense only and not for purposes of limitation, the scope of the invention being defined by the following claims.

## Claims

1. A method for providing status information, the method comprising:
obtaining status information (400) associated with a network-enabled device; and
generating an animated status report (420) for the network-enabled device based on the obtained status information.

2. The method of Claim 1, further comprising generating an audio file corresponding to the animated status report (530).

3. The method of Claim 2, wherein generating an audio file (530) comprises generating an audio file using text to voice software (530).

4. The method of Claim 1, wherein generating (530) is preceded by detecting a change in status of the network-enabled device (510) and wherein generating (530) comprises automatically generating the animated status report responsive to the detected change in status (520).

5. The method of Claim 1, further comprising:
receiving requests for subscriptions to the generated animated status report; and
forwarding the animated status report to subscribers (540).

6. The method of Claim 5, wherein forwarding (540) comprises emailing the animated status report as an attachment or emailing a link to a uniform resource locator (URL) for the animated status report (540).

7. The method of Claim 1, wherein the device (340, 341, 342) comprises an uninterruptible power supply (UPS), electricity meter, feeder protector, network attached storage or any network-enabled device.

8. A device for providing status information, the device comprising:
a status information module (265) configured to obtain status information (260) associated with a network-enabled device; and
an animated report generation module (266) configured to generate an animated status report (261) for the network-enabled device based on the obtained status information.

9. The device of Claim 8, wherein the animated report generation module (266) is further configured to generate an audio file corresponding to the animated status report (261).

10. The device of Claim 9, wherein the animated report generation module (266) is configured to generate an audio file using text to voice software.

11. The device of Claim 8, wherein the animated report generation module (266) is further configured to detect a change in status of the network-enabled device and automatically generate the animated status report (261) responsive to the detected change in status.

12. The device of Claim 8, wherein the animated report generation module (266) is further configured receive requests for subscriptions to the generated animated status report and forward the animated status report to subscribers (540).

13. The device of Claim 12, wherein the animated report generation module (266) is further configured to email the animated status report as an attachment or email a link to a uniform resource locator (URL) for the animated status report.

14. The device of Claim 8, wherein the device comprises an uninterruptible power supply (UPS), electricity meter, feeder protector, network attached storage or any network-enabled device.

15. A computer program product for providing status information, the computer program product comprising:
computer readable storage medium having computer readable program code embodied in said medium, the computer readable program code comprising
computer readable program code configured to obtain status information associated with a network-enabled device (265); and
computer readable program code configured to generate an animated status report for the network-enabled device based on the obtained status information (266).

16. The computer program product of Claim 15, further comprising computer readable program code configured to generate an audio file corresponding to the animated status report (266).

17. The computer program product of Claim 16, wherein the computer readable program code configured to generate an audio file comprises computer readable program code configured to generate an audio file using text to voice software (266).

18. The computer program product of Claim 15, further comprising computer readable program code configured to detect a change in status of the network-enabled device, wherein the computer readable program code configured to generate comprises computer readable program code configured to automatically generate the animated status report responsive to the detected change in status (266).

19. The computer readable program product of Claim 15, further comprising:
computer readable program code configured to receive requests for subscriptions to the generated animated status report; and
computer readable program code configured to forward the animated status report to subscribers (540).

20. The computer program product of Claim 19, wherein the computer readable program code configured to forward comprises computer readable program code configured to email the animated status report as an attachment or email link to a URL for the animated status report.
